# EUROPÄISCHE PATENTSCHRIFT

(11) **EP 0 532 884 B1**
(45) Veröffentlichungstag und Bekanntmachung des Hinweises auf die Patenterteilung: **30.11.1994**
(21) Anmeldenummer: 92113357.5
(22) Anmeldetag: 05.08.1992
(51) Int. Cl.: F16L 5/02, H02G 3/22, A62C 2/06

(54) **Sperreinrichtung gegen Rauchdurchtritt bei einer Vorrichtung zur Durchführung von Leitungen durch eine Wand**
Locking device against smoke lead-through at a device for the passage of conduits through a wall
Dispositif pour empêcher le passage de fumée dans un dispositif de traversée d'une paroi par des conduits

(30) Priorität: 19.09.1991 DE 4131153
(43) Veröffentlichungstag der Anmeldung: 24.03.1993
(73) Patentinhaber: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(56) Entgegenhaltungen:
- EP-A- 0 360 004
- DE-A- 2 737 978
- GB-A- 2 124 295

## Beschreibung

Die Erfindung betrifft eine Sperreinrichtung gegen Rauchdurchtritt bei einer Vorrichtung zur Durchführung von Leitungen, wie elektrische Kabel, Rohre oder dergl., durch eine Öffnung in einer zwei Brandabschnitte voneinander trennenden Wand, wobei die Vorrichtung zur Durchführung der Leitungen einen abgedichtet gegen die Wand in der Wandöffnung angeordneten Schottkasten aufweist, der eine auf beiden Seiten der Wand mündende, die Leitungen aufnehmende Durchführungsöffnung bildet, in der erst im Brandfall Brandschutz- und/oder Löschmittel wirksam werden.

Vorrichtungen zur Wanddurchführung von Leitungen, bei welchen die Durchführungsöffnung erst im Brandfall durch ein erst dann zur Wirkung kommendes Brandschutzmittel verschlossen wird, vorher aber immer offen ist, besitzen gegenüber Abschottungssystemen mit einer durch eine Schottmasse verfüllten Durchführungsöffnung den Vorteil, daß Änderungen oder Ergänzungen in der Leitungsbelegung der Durchführungsöffnung vorgenommen werden können, ohne daß es jedesmal einer vorhergehenden Freilegung der Durchführungsöffnung durch Bohr- oder Stemmarbeiten bedarf. Der Sperreinrichtung gegen Rauchdurchtritt obliegt dabei die Aufgabe, die Ausbreitung von Rauch durch die Durchführungsöffnung hindurch auch dann schon zu verhindern, wenn zu Beginn des Brandgeschehens die Durchführungsöffnung durch das Brandschutzmittel noch nicht verschlossen ist. - Bei bekannten Vorrichtungen und Sperreinrichtungen dieser Art (vgl. beispielsweise die FR-A-2606443 und die Firmendruckschrift der ASEA Brown Boveri AG "Schottung von Wand- und Deckendurchbrüchen", ABB-ZST 31 (12.88 1000 HD) Seite 7) ist das Brandschutzmittel ein Intumeszenzmaterial, das im Brandfall infolge der Wärmeeinwirkung aufschäumt und sein ursprüngliches Volumen vergrößert, so daß es die nach der Leitungsbelegung noch frei gebliebenen Bereiche der Durchführungsöffnung verschließt. Der Schottkasten ist ein auf beiden Seiten der Wand offener Blechkasten, dessen Wände innenseitig mit aus dem Intumeszenzmaterial bestehenden, luftdicht gekapselten Blöcken ausgekleidet sind. Die Sperreinrichtung gegen Rauchdurchtritt besteht aus stirnseitig am Schottkasten vorgesehenen, keine eigene nennenswerte Brandschutzwirkung entfaltenden Polystyrol-Kappen, die mit passenden Öffnungen für die einzelnen Leitungen versehen und mit einem geeigneten dauerelastischen Dichtstoff gegen den Schottkasten und gegen die Leitungen verfugt werden müssen. Das erfordert im Fall von Änderungen oder Ergänzungen der Leitungsbelegung umständliche und zeitaufwendige Arbeiten, da die Polystyrol-Kappen der jedesmal neuen Leitungsbelegung angepaßt und neu verfugt werden müssen.

Der Erfindung liegt die Aufgabe zugrunde, eine Sperreinrichtung der eingangs genannten Art so auszubilden, daß sie bei Änderungen oder Ergänzungen der Leitungsbelegung der Durchführungsöffnung keinerlei Anpassungsarbeiten erfordert. Auch soll die Sperreinrichtung die Möglichkeit bieten, zusätzlich wirksam und anhaltend zur Brandabschottung beizutragen.

Diese Aufgabe wird nach der Erfindung dadurch gelöst, daß der Schottkasten auf beiden Seiten der Wand mit je mindestens einem beweglichen Sperrglied versehen ist, das die Mündung der Durchführungsöffnung nach außen abschließt, daß sich die Sperrglieder unabhängig voneinander, gesteuert durch in den Brandabschnitten beidseits der Wand angeordnete Rauchmelder, öffnen können, wobei die Steuerung so ausgebildet ist, daß bei Rauch in einem der beiden Brandabschnitte sich das auf dessen Seite der Wand befindliche Sperrglied öffnet, und daß Mittel vorgesehen sind, die bei offenem Sperrglied den Schottkasten mit einem unbrennbaren Gasmedium versorgen und eine Strömung dieses Gasmediums durch die geöffnete Mündung der Durchführungsöffnung hindurch nach außen erzeugen.

Wird daher auf einer Seite der Wand Rauch gemeldet, öffnet sich das auf derselben Wandseite befindliche Sperrglied mit dem Ergebnis, daß eine aus dem Schottkasten durch die geöffnete Mündung der Durchtrittsöffnung hindurch nach außen gerichtete Strömung des Gasmediums entsteht, die das Eindringen von Rauch, Flammen, Konvektionswärme und dergl. Brandauswirkungen in die Durchführungsöffnung und in den Schottkasten hinein verhindert. Das Gasmedium kann dabei im einfachsten Fall aus Luft bestehen, aber auch flammenerstickende Eigenschaften besitzen, wie insbes. Stickstoff oder Kohlendyoxid. Durch die Stärke und Dauer der Strömung läßt sich außerdem die Sperrwirkung in weiten Grenzen beeinflussen, so daß bei ausreichenden Mengen des Gasmediums eine auch zeitlich sehr anhaltende Schutzfunktion erreicht werden kann. Im übrigen läßt die erfindungsgemäße Sperreinrichtung die Ausbildung des Abschottungssystems bezüglich der in der Durchführungsöffnung außerdem zur Wirkung kommenden Brandschutz- und/oder Löschmittel weitgehend offen, so daß von Fall zu Fall jeweils besonders vorteilhafte Kombinationsmöglichkeiten verwirklicht und die Art des Gasmediums einerseits und des Brandschutz- und/oder Löschmittels andererseits optimal aufeinander abgestimmt werden können. So kann die erfindungsgemäße Sperreinrichtung insbes. bei Abschottungssystemen zum Einsatz kommen, die ein im Brandfall die Durchführungsöffnung verschließendes Intumeszenzmaterial als Brandschutzmittel aufweisen, wobei dann die Strömung des Gasmediums selbstverständlich nur solange aufrecht erhalten zu werden braucht, bis das Intumeszenzmaterial die Durchführungsöffnung verschlossen hat. Die erfindungsgemäße Sperreinrichtung ist aber beispielsweise auch in Verbindung mit Abschottungssystemen geeignet, bei welchen insbes. flüssige Löschmittel in der Durchführungsöffnung zur Wirkung kommen, ohne daß überhaupt ein Verschluß der Durchführungsöffnung stattfindet, wie weiter unten noch beschrieben wird.

Eine konstruktiv und steuerungstechnisch besonders einfache und daher bevorzugte Ausführungsform der Erfindung ist dadurch gekennzeichnet, daß die Sperrglieder als Klappen ausgebildet sind, die durch von den Rauchmeldern ein- und ausschaltbare Elektromagnete in der Schließstellung gehalten sind und sich bei ausgeschalteten Elektromagneten in die Offenstellung bewegen können. Dabei bedarf es bezüglich der Öffnungsbewegung der Klappen dann keiner besonderen Antriebseinrichtungen, wenn in weiterer zweckmäßiger Ausbildung der Erfindung die Klappen mit horizontaler Gelenkachse oberhalb der jeweiligen Mündung der Durchführungsöffnung am Schottkasten angelenkt sind und sich bei ausgeschaltetem Elektromagnet unter dem Druck und der Strömung des Gasmediums selbsttätig nach außen öffnen.

Die Mittel zur Versorgung des Schottkastens mit dem Gasmedium und zur Erzeugung von dessen Strömung können im Rahmen der Erfindung verschieden gestaltet sein. Im einfachsten Fall bestehen sie zweckmäßigerweise aus mindestens einer im Schottkasten mündenden und außerhalb des Schottkastens mit dem unter Druck stehenden Gasmedium gespeisten Zuführungsleitung. Es genügt, die Speisung der Zuführungsleitung mit dem Gasmedium erst mit der Meldung von Rauch in einem der Brandabschnitte beginnen zu lassen, was den Vorteil bringt, daß das Gasmedium erst im Brandfall einen zum Öffnen des jeweiligen Sperrgliedes führenden Überdruck im Schottkasten erzeugt und somit für die Zeit vorher keine besonderen Anforderungen an die Dichtigkeit des Sperrgliedabschlusses gestellt zu werden brauchen. Das aus der Zuführungsleitung in den Schottkasten strömende Gasmedium kann dazu beitragen, ein Löschmittel möglichst wirksam in die Durchführungsöffnung einzubringen. Dazu empfiehlt es sich, die Anordnung so zu treffen, daß die Zuführungsleitung in einer Verteilerdüse mündet, die mit einem flüssigen und/oder einem gasförmigen Löschmittel beaufschlagbar ist, so daß der aus der Mündung der Zuführungsleitung austretende Strahl des Gasmediums das Löschmittel in der Verteilerdüse fein verteilt und in die Durchführungsöffnung einsprüht, wodurch die Lösch- und/oder Kühlwirkung des Löschmittels u. U. erheblich verbessert werden kann. Vorzugsweise ist im Schottkasten oberhalb der Durchführungsöffnung ein Vorratsbehälter für das Löschmittel vorgesehen, der mit dem Innern der Verteilerdüse in Verbindung steht. Der Strahl des Gasmediums kann dabei nach Art einer Strahlpumpe das Löschmittel aus dem Vorratsbehälter ansaugen; das Löschmittel kann auch unter Druck in die Verteilerdüse eingespritzt werden. Im ersteren Fall umgibt zweckmäßigerweise der Vorratsbehälter die Verteilerdüse ringförmig, wobei der Düsenmantel einen Wandteil auch des Vorratsbehälters bildet und mit Durchtrittsöffnungen für das Löschmittel versehen ist. Nach einem weiteren Vorschlag der Erfindung kann der Vorratsbehälter Aluminiumhydroxid Al(OH)₃ enthalten. Aluminiumhydroxid hat die Eigenschaft, sich in der Brandwärme endogen zu zersetzen und dabei Wasserdampf abzuspalten, der unter dem sich dann im Vorratsbehälter aufbauenden Druck in die Verteilerdüse strömt.

In einer anderen Ausführungsform, die bei der Verwendung von Luft für das Gasmedium besonders vorteilhaft ist, umfassen die Mittel zur Versorgung mit dem Gasmedium und zur Erzeugung von dessen Strömung mindestens eine im Schottkasten angeordnete und mit dem Druckausgang zur Durchführungsöffnung hin mündende Gaspumpe, die ansaugseitig an im Schottkasten vorgesehene Ansaugkanäle angeschlossen ist, welche auf beiden Seiten der Wand je eine Ansaugmündung mit einem von den Rauchmeldern steuerbaren Sperrorgan aufweisen, wobei die Steuerung der Sperrorgane so ausgebildet ist, daß bei Rauch in einem der beiden Brandabschnitte sich das jeweils auf der anderen Seite der Wand befindliche Sperrorgan öffnet. Die Luft wird daher immer auf der dem Brand abgewandten Seite der Wand angesaugt und die Steuerung der Sperrglieder und Sperrorgane erfolgt zwangsweise so, daß die Freigabe des Sperrglieds auf einer Seite der Wand mit der Freigabe des Sperrorgans auf der jeweils anderen Wandseite verbunden ist und also die Luftansaugung immer nur aus dem jeweils rauchfreien Brandabschnitt stattfindet. Ähnlich wie schon für die Sperrglieder empfiehlt es sich auch für die Sperrorgane, sie als Ansaugklappen auszubilden, die in ihrer Sperrstellung durch von den Rauchmeldern ein- und ausschaltbare Elektromagnete gehalten sind und sich bei ausgeschaltetem Elektromagneten durch die Wirkung des Ansaugunterdrucks nach innen öffnen.

Die Gaspumpe ist vorzugsweise als Fördergebläse für das Gasmedium ausgebildet und durch einen von den Rauchmeldern ein- und ausschaltbaren Elektromotor antreibbar. Auch hier kann das Einbringen des Gasmediums in die Durchführungsöffnung mit dem des Löschmittels verbunden werden, um dessen Löschwirkung zu verbessern. Eine dafür besonders zweckmäßige Ausführungsform ist dadurch gekennzeichnet, daß das Fördergebläse mindestens ein Gebläserad in einer Gebläsekammer aufweist, die mit einem flüssigen und/oder einem gasförmigen Löschmittel beaufschlagbar ist, so daß das Gebläserad das Löschmittel mit dem Gasmedium vermischt in die Durchführungsöffnung einsprüht. Der Elektromotor des Fördergebläses kann mit einer das Löschmittel unter Druck in die Gebläsekammer einspritzenden Kreiselpumpe gekuppelt sein. Im übrigen kann es sich auch hier empfehlen, im Schottkasten oberhalb der Durchführungsöffnung einen Vorratsbehälter für das Löschmittel vorzusehen, der mit der Ansaugseite der Gebläsekammer bzw. der Kreiselpumpe in Verbindung steht. Enthält der Vorratsbehälter wiederum das schon erwähnte Aluminiumhydroxid, kann die Zersetzung des Aluminiumhydroxids in der Brandwärme einen Wasserdampfstrom durch die Kreiselpumpe erzeugen, der die Kreiselpumpe als Turbine antreibt, die dann einen vom Elektromotor unabhängigen Antrieb für das Fördergebläse bildet, was von Bedeutung sein kann, wenn im späteren Verlauf des Brandgeschehens die elektrische Versorgung und damit der Elektromotor des Fördergebläses ausfallen sollte.

Für den Fall, daß es genügt, die Sperre gegen Rauchdurchtritt erst mit den Löschvorgängen in der Durchführungsöffnung wirksam werden zu lassen, kann der Zustrom des Löschmittels überhaupt als einziges Mittel zur Erzeugung der Strömung des Gasmediums Verwendung finden. Eine dafür bevorzugte Ausführungsform ist dadurch gekennzeichnet, daß die Gaspumpe als Flüssigkeitsstrahlpumpe mit vom Löschmittel gebildeter Strahlflüssigkeit ausgebildet ist, wozu im Schottkasten in einer mit den Ansaugkanälen in Verbindung stehenden Diffusordüse eine Strahldüse angeordnet ist, die an eine außerhalb des Schottkastens mit dem unter Druck stehenden Löschmittel gespeiste Versorgungsleitung angeschlossen ist, wobei die Einspeisung des Löschmittels in die Versorgungsleitung durch die Rauchmelder an- und abschaltbar ist. Der Löschmittelstrahl bewirkt dann unmittelbar die Förderung des Gasmediums in die Durchführungsöffnung und den Aufbau der für die Rauchsperre erforderlichen Strömung des Gasmediums.

Im folgenden wird die Erfindung an in der Zeichnung dargestellten Ausführungsbeispielen näher erläutert; es zeigen in schematischer Darstellung:
- Fig. 1: eine Abschottungsvorrichtung in einem senkrechten, in Leitungslängsrichtung verlaufenden Schnitt,
- Fig. 2: eine andere Ausführungsform der Abschottungsvorrichtung in einer der Fig. 1 entsprechenden Darstellung,
- Fig. 3: eine Schemadarstellung zur Erläuterung der steuerungstechnischen Eigenschaften der in Fig. 2 dargestellten Abschottungsvorrichtung,
- Fig. 4: den Gegenstand der Fig. 3 in einem anderen Steuerungszustand, und
- Fig. 5: eine weitere Ausführungsform der Abschottungsvorrichtung in einer den Fig. 1 und 2 entsprechenden Darstellung.

Die in der Zeichnung dargestellten Vorrichtungen dienen zur Brandabschottung einer Wandöffnung 2 für die Durchführung von Leitungen 1, wie elektrische Kabel, Rohre oder dergl., durch eine Wand 3, die zwei Brandabschnitte voneinander trennt. Die Vorrichtung umfaßt einen in der Wandöffnung 2 angeordneten Schottkasten 4, zwischen dem und der Wand 3 eine Abdichtung 5 aus beispielsweise Brandschutzschaum vorgesehen ist. Der Schottkasten 4 ist auf der unteren Laibungsfläche 2' der Wandöffnung 2 durch Blöcke 6 aus beispielsweise verfestigter Steinwolle abgestützt, die sich entlang der seitlichen Laibungswände der Wandöffnung 2 erstrecken. Zwischen diesen Blöcken 6 bildet der Schottkasten 4 eine Durchführungsöffnung 7 für die Leitungen 1, die auf einer Leitungspritsche 8 liegen, welche die Durchführungsöffnung 7 durchsetzt.

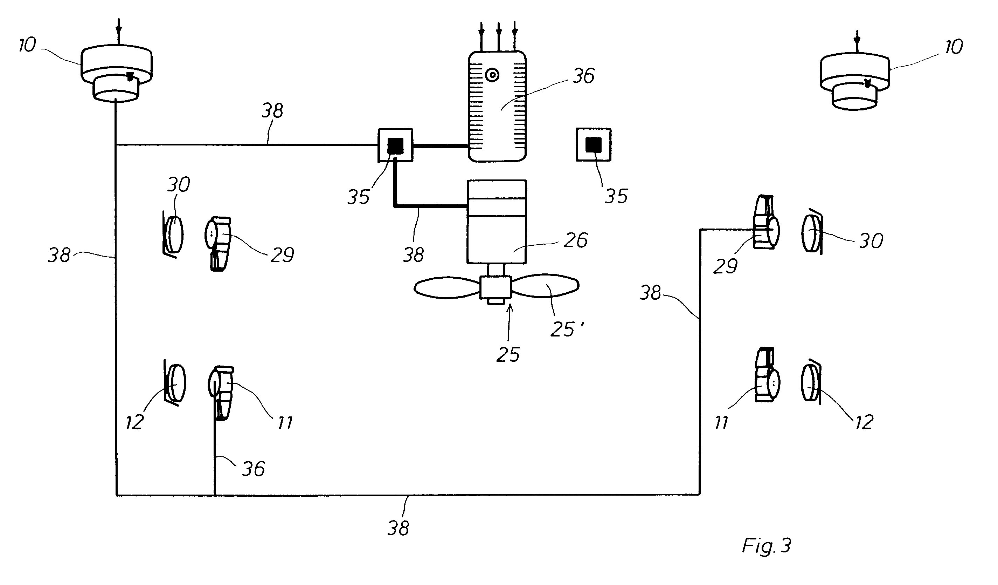

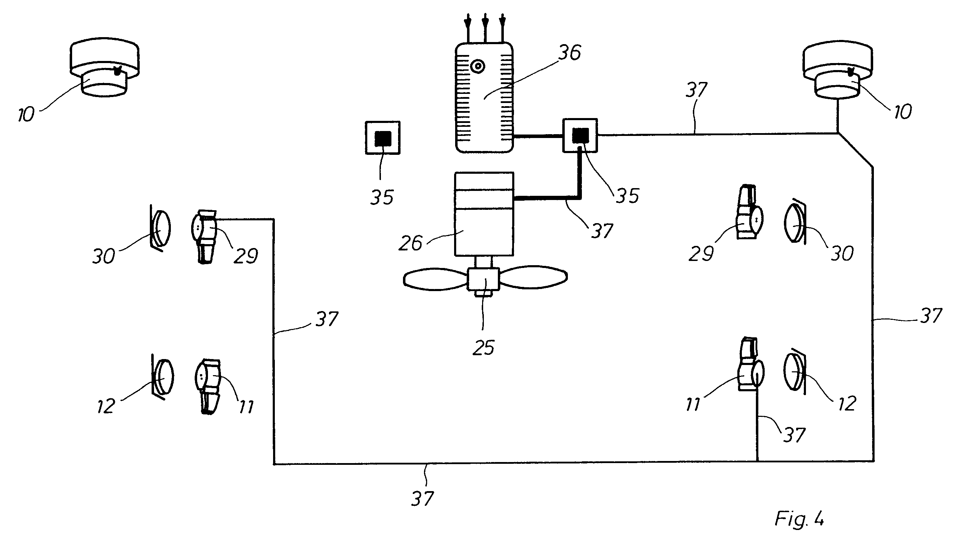

In allen Ausführungsbeispielen ist der Schottkasten 4 auf beiden Seiten der Wand 3 mit je einem beweglichen Sperrglied 9 versehen, das die Mündung der Durchführungsöffnung 7 nach außen abschließt. Die beiden Sperrglieder 9 können sich unabhängig voneinander öffnen, und zwar gesteuert durch in den Brandabschnitten beidseits der Wand 3 angeordnete, lediglich in den Fig. 3 und 4 dargestellte Rauchmelder 10. Die Steuerung ist dabei so ausgebildet, daß bei Rauch in einem der beiden Brandabschnitte sich das auf dessen Seite der Wand 3 befindliche Sperrglied 9 öffnet. Entwickelt sich also der Brand auf der in den Figuren linken Seite des Schottkastens 4, öffnet sich das auf dieser Seite befindliche Sperrglied, während bei einer Brandentwicklung auf der rechten Seite des Schottkastens sich das auf dieser Seite befindliche Sperrglied öffnet. Außerdem sind im einzelnen noch zu beschreibende Mittel vorgesehen, die bei einem offenen Sperrglied 9 den Schottkasten 4 und die Durchführungsöffnung 7 mit einem unbrennbaren Gasmedium, wie Luft, Stickstoff, Kohlendyoxid oder dergl. versorgen, so daß im Schottkasten 4 bzw. in der Durchführungsöffnung 7 ein Überdruck entsteht und eine Strömung dieses Gasmediums durch die geöffnete Mündung der Durchführungsöffnung 7 hindurch nach außen erzeugt wird. Im Ergebnis ist diese Strömung des Gasmediums in denjenigen Brandabschnitt hinein gerichtet, in dem die Rauchmeldung erfolgt ist, was zur Folge hat, daß die Strömung dem Eindringen von Rauch, Flammen und dergl. Brandauswirkungen in die Durchführungsöffnung 7 entgegenwirkt.

Die Sperrglieder 9 sind in den Ausführungsbeispielen als Klappen ausgebildet. Sie werden durch Elektromagnete 11 in der Schließstellung gehalten, wozu die von den Rauchmeldern über Leitungen 11' ein- und ausschaltbaren Elektromagnete 11 in der Stirnwand 13 des Schottkastens 4 angeordnet und die Sperrglieder 9 mit den Elektromagneten 11 gegenüber liegenden Magnetgegenplatten 12 ausgestattet sind. Im eingeschalteten Zustand ziehen die Elektromagnete 11 die Magnetgegenplatten 12 an und halten so die Sperrglieder 9 im Schließzustand. Bei ausgeschaltetem Elektromagnet 11 kann sich dagegen das diesem Elektromagneten zugeordnete Sperrglied 9 in die Offenstellung bewegen. Dies erfolgt in den Ausführungsbeispielen ohne eigenen Stellantrieb für die Sperrglieder 9 dadurch, daß die Klappen mit horizontaler Gelenkachse 9' oberhalb der jeweiligen Mündung der Durchführungsöffnung 7 am Schottkasten 4 angelenkt sind und bei ausgeschaltetem Elektromagneten 11 nur unter der Wirkung ihres Gewichtes senkrecht nach unten in der Schließstellung hängen. Sie können sich daher bei ausgeschaltetem Elektromagnet 11 unter dem sich in der Durchführungsöffnung 7 aufbauenden Druck des Gasmediums und der durch die Mündung der Durchführungsöffnung 7 nach außen gerichteten Strömung des Gasmediums selbsttätig nach außen öffnen. Die Sperrglieder 9 bestehen aus einem dichten Kupferdrahtgewebe und sind an ihrem unteren Ende mit Fransen 14 besetzt, die zwischen die in der Leitungspritsche 8 liegenden Leitungen 1 greifen und dadurch in der Schließstellung der Sperrglieder 9 die Abdichtung der Durchtrittsöffnung 7 nach außen verbessern.

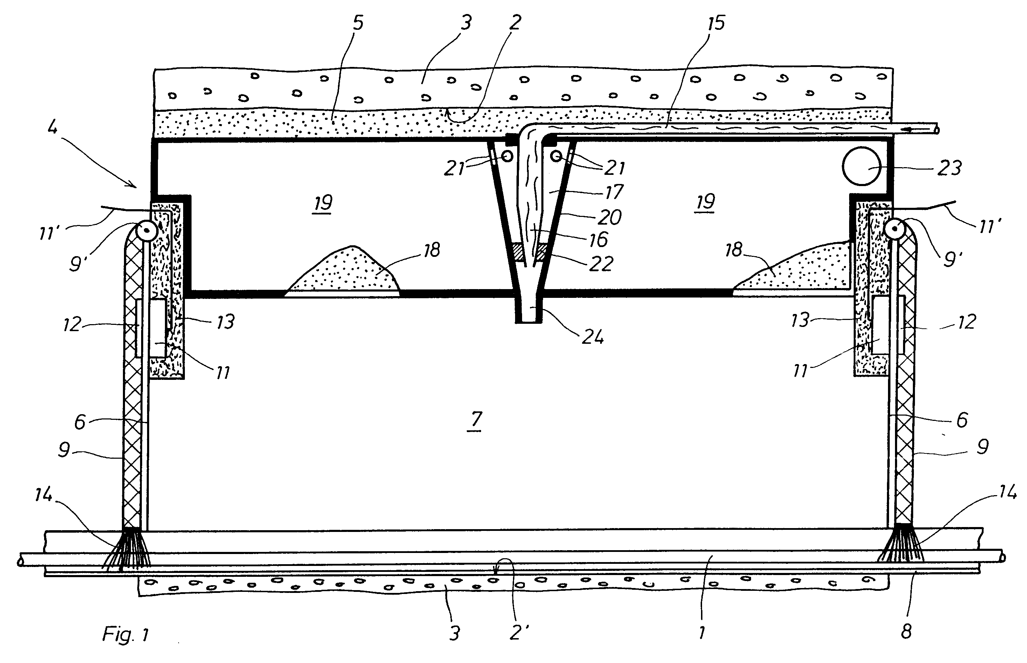

Die Mittel zur Versorgung des Schottkastens 4 mit dem Gasmedium und zur Erzeugung von dessen Strömung bestehen im Ausführungsbeispiel nach Fig. 1 aus einer im Schottkasten 4 mündenden und außerhalb des Schottkastens in nicht näher dargestellter Weise mit dem unter Druck stehenden Gasmedium gespeisten Zuführungsleitung 15. Die Speisung der Zuführungsleitung 15 mit dem unter Druck stehenden Gasmedium wird in in der Zeichnung nicht näher dargestellter Weise von den Rauchmeldern 10 in beiden Brandabschnitten gesteuert, so daß das Gasmedium erst in der Zuführungsleitung 15 zu strömen beginnt, wenn in einem der beiden Brandabschnitte beidseits der Wand 3 Rauch gemeldet wird. Die Zuführungsleitung 15 mündet mit einer Strahldüse 16 in einer Verteilerdüse 17, die mit einem bei 18 angedeuteten flüssigen Löschmittel beaufschlagt wird, so daß der aus der Strahldüse 16 austretende Strahl des Gasmediums das Löschmittel fein verteilt in die Durchführungsöffnung 7 einsprüht. Das Löschmittel 18 ist im Schottkasten 4 oberhalb der Durchführungsöffnung 7 in einem Vorratsbehälter 19 enthalten, der mit dem Inneren der Verteilerdüse 17 in Verbindung steht. Dabei umgibt der Vorratsbehälter 19 ringförmig die Verteilerdüse 17. Der Düsenmantel 20 bildet zugleich einen Wandteil auch des Vorratsbehälters 19 und ist mit Durchtrittsöffnungen 21 für das Löschmittel 18 versehen. Die Verteilerdüse 17 ist ausgangsseitig durch einen die Strahldüse 16 umgebenden Ringstopfen 22 verschlossen, der aus einem in der Brandhitze schmelzenden Werkstoff, wie Wachs oder dergl., besteht und daher die Beimischung des Löschmittels 18 zum Gasmedium erst freigibt, wenn sich die Brandwärme bis in die Durchführungsöffnung 7 bzw. den Schottkasten 4 tatsächlich ausgebreitet hat. Der Vorratsbehälter 19 kann Aluminiumhydroxid Al(OH)₃ enthalten, das sich in der Brandwärme zersetzt und dabei Wasser und Wasserdampf abspaltet, die durch die Durchtrittsöffnungen 21 hindurch unter Druck in die Verteilerdüse 17 gelangen. Der Vorratsbehälter 19 kann im übrigen einen Anschluß 23 für eine selbst nicht dargestellte Versorgungsleitung besitzen, durch die der Vorratsbehälter mit dem Löschmittel 18 nachgefüllt werden kann. - Entwickelt sich auf einer Seite der Wand 3 ein Brand und haben die Rauchmelder 10 in diesem Brandabschnitt Rauch gemeldet, öffnet sich das Sperrglied 9 auf dieser Wandseite und gibt die entsprechende Mündung der Durchtrittsöffnung 7 frei. Gleichzeitig beginnt die Förderung des Gasmediums in der Zuführungsleitung 15, so daß das Gasmedium in der Durchführungsöffnung 7 einen Überdruck aufbaut und eine Strömung des Gasmediums aus der Durchführungsöffnung 7 durch deren geöffnete Mündung hindurch in den Brandabschnitt entsteht, in dem sich der Brand entwickelt. Diese Strömung des Gasmediums verhindert den Eintritt von Rauch in die Durchführungsöffnung 7. Die Löschwirkung in der Durchführungsöffnung 7 beginnt erst, wenn der Zustrom des Löschmittels 18 freigegeben wird. Das ist im Ausführungsbeispiel dann der Fall, wenn sich der Brand soweit entwickelt hat, daß unter der Brandwärme der Ringstopfen 22 schmilzt. Dann führt die Ansaugwirkung des durch die Strahldüse 16 austretenden Gasstrahls zum Eintritt von Löschmittel 18 in die Verteilerdüse 17 mit dem Ergebnis, daß das Löschmittel in der Mündung 24 der Verteilerdüse 17 zerstäubt, mit dem Gasmedium innig vermischt und vom Gasmedium in die Durchführungsöffnung 7 eingesprüht wird.

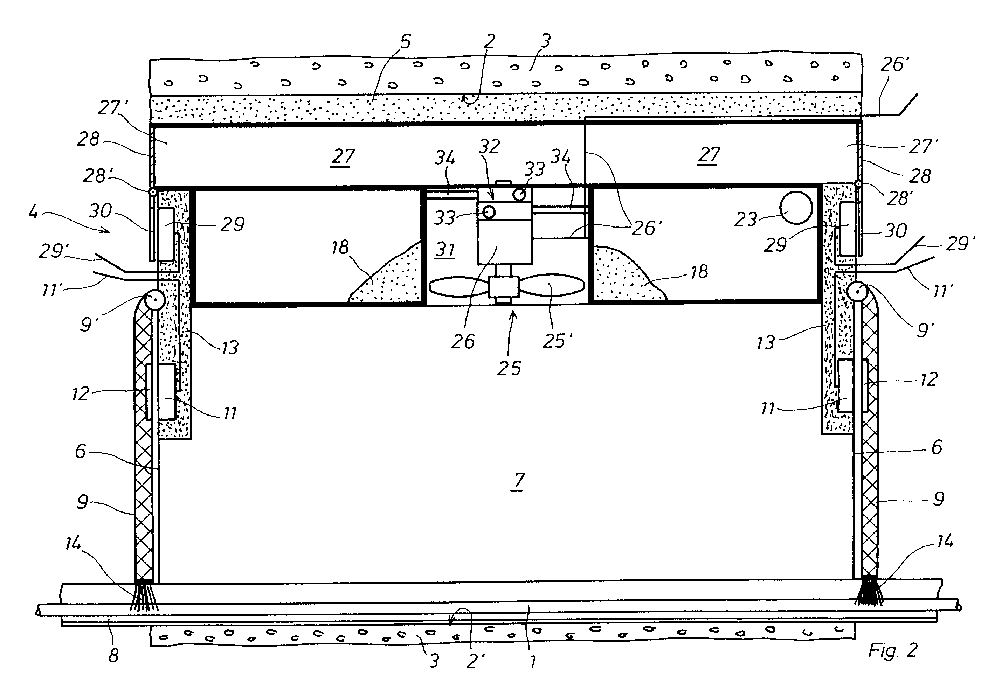

Im Ausführungsbeispiel nach Fig. 2 wird für das Gasmedium Luft verwendet, die auf jeweils der dem Brand abgewandten Seite der Wand 3 angesaugt wird. Zum Ansaugen und zur Strömungserzeugung dient ein Fördergebläse 25 für die Luft. Das Fördergebläse 25 wird durch einen Elektromotor 26 mit elektrischer Anschlußleitung 26' angetrieben, der von den in der Fig. 2 wiederum nicht dargestellten Rauchmeldern 10 ein- und ausgeschaltet werden kann. Das Fördergebläse 25 ist im Schottkasten 4 angeordnet und mündet mit dem Druckausgang zur Durchführungsöffnung 7 hin. Ansaugseitig ist das Fördergebläse 25 an einen im Schottkasten 4 vorgesehenen Ansaugkanal 27 angeschlossen, der auf beiden Seiten der Wand 3 je eine Ansaugmündung 27' mit einem von den Rauchmeldern 10 steuerbaren Sperrorgan 28 aufweist. Die Steuerung der Sperrorgane 28 ist so ausgebildet, daß bei Rauch in einem der beiden Brandabschnitte sich das jeweils auf der anderen Seite der Wand 3 befindliche Sperrorgan 28 öffnet. Die Sperrorgane 28 sind als Ansaugklappen ausgebildet, die in ihrer in Fig. 2 gezeigten Sperrstellung durch von den Rauchmeldern 10 ein- und ausschaltbare Elektromagnete 29 mit Anschlußleitungen 29' gehalten sind, wobei die Elektromagnete 29 in der Stirnwand 13 des Schottkastens 4 angeordnet und ihnen gegenüber an den Sperrorganen 28 Magnetgegenplatten 30 vorgesehen sind. Wird einer der Elektromagnete 29 durch die Rauchmelder 10 ausgeschaltet, öffnet sich das entsprechende Sperrorgan 28 bei laufendem Fördergebläse 25 durch die Wirkung des Ansaugunterdruckes im Ansaugkanal 27 nach innen, so daß das Fördergebläse 25 durch den Ansaugkanal 27 und das geöffnete Sperrorgan 28 hindurch Luft ansaugen kann. Die Sperrorgane 28 sind gelenkig um Achsen 28' am Schottkasten 4 gelagert und werden durch das Gewicht der die Magnetgegenplatten 30 tragenden Klappenteile in der Schließstellung gehalten, wobei jedoch das Gewicht genügend klein ist, so daß der Ansaugunterdruck im Ansaugkanal 27 die Ansaugklappen zu öffnen vermag, wenn sie durch den ihnen zugeordneten Elektromagneten 29 nicht in der Schließstellung gehalten sind. Auch hier kann der vom Fördergebläse 25 erzeugte Luftstrom dazu Verwendung finden, Löschmittel 18 in die Durchführungsöffnung 7 einzutragen. Dazu besitzt das Fördergebläse 25 ein Gebläserad 25' in einer Gebläsekammer 31, die mit dem flüssigen Löschmittel 18 beaufschlagbar ist. Das Gebläserad 25' vermischt das Löschmittel 18 mit dem Luftstrom, wodurch das Löschmittel zerstäubt und mit dem Luftstrom in die Durchführungsöffnung 7 eingesprüht wird. Der Elektromotor 26 ist überdies mit einer das Löschmittel 18 unter Druck in die Gebläsekammer 31 einspritzenden Kreiselpumpe 32 gekuppelt, wobei die Austrittsöffnungen für das Löschmittel mit 33 bezeichnet sind. Im Schottkasten 4 ist oberhalb der Durchführungsöffnung 7 wiederum ein Vorratsbehälter 19 für das Löschmittel 18 vorgesehen, der über Verbindungsleitungen 34 mit der Ansaugseite der Kreiselpumpe 32 in Verbindung steht. Der Vorratsbehälter 19 kann über einen Anschluß 23 und eine wiederum nicht dargestellte Versorgungsleitung mit Löschmittel 18 nachgefüllt werden. Enthält der Vorratsbehälter 19 Aluminiumhydroxid, kann die Zersetzung des Aluminiumhydroxids in der Brandwärme einen Wasserdampfstrom durch die Kreiselpumpe 32 erzeugen, der die Kreiselpumpe als Turbine antreibt, die dann einen vom Elektromotor 26 unabhängigen Antrieb für das Fördergebläse 25 bildet. Der Luftstrom wird somit auch dann noch aufrecht erhalten, wenn im Brandfall der Antrieb des Fördergebläses 25 durch den Elektromotor 26 ausgefallen sein sollte.

Die steuerungstechnischen Eigenschaften der in Fig. 2 dargestellten Vorrichtung läßt sich anhand der Fig. 3 und 4 folgendermaßen beschreiben: In beiden Figuren 3, 4 sind die Brandmelder 10, die Elektromagneten 11 für die Sperrglieder 9 mit den entsprechenden Magnetgegenplatten 12 und die Elektromagnete 29 für die Sperrorgane 28 mit wiederum den entsprechenden Magnetgegenplatten 30, sowie das Fördergebläse 25 mit dem Elektromotor 26 und elektrischen Schaltern 35 zum Ein- und Ausschalten des Elektromotors 26 dargestellt. Die elektrische Speisung erfolgt über ein Netzgerät 36 und gegebenenfalls über einen einen Notstromversorgung bildenden, in der Zeichnung nicht dargestellten Akkumulator, der im Schottkasten 4 untergebracht sein kann. Entwickelt sich auf der in der Zeichnung linken Seite der Wand 3 ein Brand, spricht der auf dieser Seite der Wand 3 befindliche, in Fig. 3 linke Rauchmelder 10 an und schaltet über den linken Schalter 35 den Elektromotor 26 des Fördergebläses 25 ein. Gleichzeitig wird der linke Elektromagnet 11 für das auf dieser Seite der Wand befindliche Sperrglied 9 und der rechte Elektromagnet 29 für das auf der entgegen gesetzten Wandseite befindliche Sperrorgan 28 ausgeschaltet, mit dem Ergebnis, daß sich das Sperrglied 9 auf der linken Wandseite und das Sperrorgan 28 auf der rechten Wandseite öffnen. Diese Steuerungsverhältnisse sind in Fig. 3 durch die Funktionsverbindungsstriche 38 deutlich gemacht. - Erfolgt dagegen die Brandentwicklung auf der in der Zeichnung rechten Wandseite, spricht der in Fig. 4 rechte Rauchmelder 10 in diesem Brandabschnitt an, wodurch über den rechten Schalter 35 wiederum der Elektromotor 26 des Fördergebläses 25 eingeschaltet, der rechte Elektromagnet 11 für das Sperrglied 9 auf derselben Seite und der Elektromagnet 29 für das Sperrorgan 28 auf der gegenüber liegenden Wandseite ausgeschaltet werden, so daß sich das rechte Sperrglied 9 und das linke Sperrorgan 28 öffnen können. Diese Steuerungsverhältnisse sind in Fig. 4 durch die Funktionsverbindungsstriche 37 deutlich gemacht.

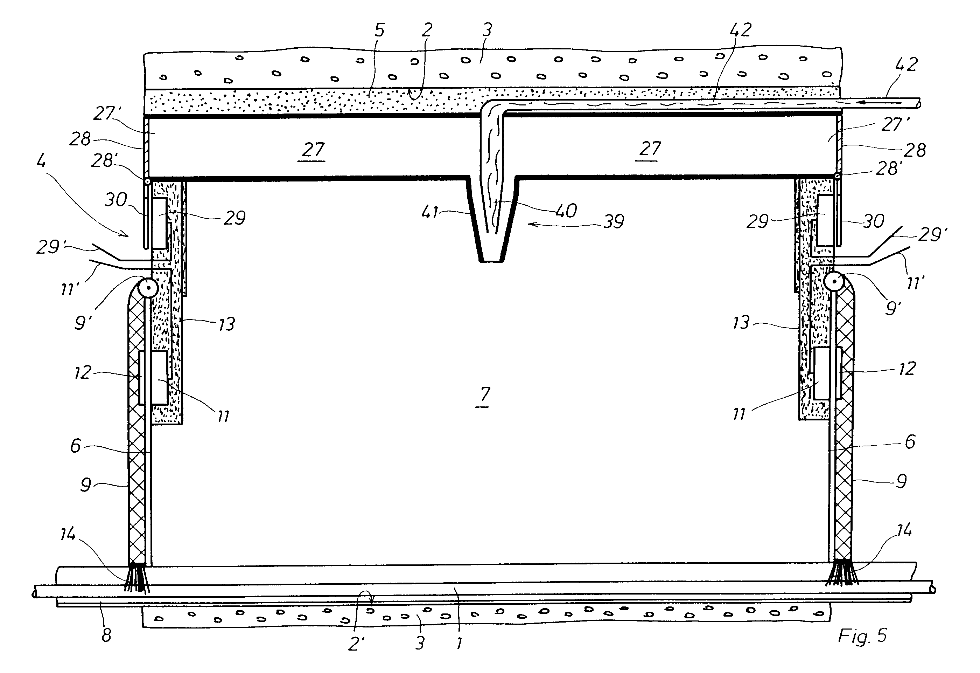

Fig. 5 schließlich zeigt ein Ausführungsbeispiel, das sich vom Ausführungsbeispiel der Fig. 2 im wesentlichen darin unterscheidet, daß das Löschmittel selbst unmittelbar zur Erzeugung des Luftstromes dient. Die Anordnung der Sperrglieder 9 an den Mündungen der Durchführungsöffnung 7 und der Sperrorgane 29 an den Ansaugmündungen des Ansaugkanales 27 sowie deren Steuerung stimmt überein mit dem Ausführungsbeispiel nach Fig. 2, so daß diese Teile und deren Funktion nicht nochmals beschrieben werden müssen. Das Löschmittel dient als Strahlflüssigkeit für eine allgemein mit 39 bezeichnete Flüssigkeitstrahlpumpe, bestehend aus einer vom Löschmittel durchströmten Strahldüse 40 in einer Diffuserdüse 41, die ansaugseitig an den Ansaugkanal 27 angeschlossen ist. Die Strahldüse 40 ist an eine außerhalb des Schottkastens 4 in nicht dargestellter Weise mit dem unter Druck stehenden Löschmittel gespeiste Versorgungsleitung 42 angeschlossen. Die Einspeisung des Löschmittels in die Versorgungsleitung 42 ist durch die Rauchmelder 10 in wiederum nicht dargesteller Weise an- und abschaltbar. Wird in einem der Brandabschnitte Rauch gemeldet, beginnt die Strömung des Löschmittels durch die Strahldüse 40 hindurch in die Durchführungsöffnung 7 mit dem Ergebnis, daß von der Diffusordüse 41 Luft angesaugt und zusammen mit dem Löschmittel in die Durchführungsöffnung 7 eingetragen wird, wodurch sich in der Durchführungsöffnung 7 ein Luftüberdruck aufbaut, der in der schon früher beschriebenen Weise zu einer Luftströmung aus der Durchführungsöffnung 7 hinaus in den brennenden Brandabschnitt führt, die dem Eintritt von Brandauswirkungen, wie Rauch, Flammen und dergl. in die Durchführungsöffnung 7 entgegenwirkt.

## Patentansprüche

1. Sperreinrichtung gegen Rauchdurchtritt bei einer Vorrichtung zur Durchführung von Leitungen (1), wie elektrische Kabel, Rohre oder dergl., durch eine Öffnung (2) in einer zwei Brandabschnitte voneinander trennenden Wand (3), wobei die Vorrichtung zur Durchführung der Leitungen (1) einen abgedichtet gegen die Wand (3) in der Wandöffnung (2) angeordneten Schottkasten (4) aufweist, der eine auf beiden Seiten der Wand (3) mündende, die Leitungen (1) aufnehmende Durchführungsöffnung (7) bildet, in der erst im Brandfall Brandschutz- und/oder Löschmittel wirksam werden, dadurch gekennzeichnet, daß der Schottkasten (4) auf beiden Seiten der Wand (3) mit je mindestens einem beweglichen Sperrglied (9) versehen ist, das die Mündung der Durchführungsöffnung (7) nach außen abschließt, daß sich die Sperrglieder (9) unabhängig voneinander, gesteuert durch in den Brandabschnitten beidseits der Wand angeordnete Rauchmelder (10), öffnen können, wobei die Steuerung so ausgebildet ist, daß bei Rauch in einem der beiden Brandabschnitte sich das auf dessen Seite der Wand (3) befindliche Sperrglied (9) öffnet, und daß Mittel vorgesehen sind, die bei offenem Sperrglied (9) den Schottkasten (4) mit einem unbrennbaren Gasmedium versorgen und eine Strömung dieses Gasmediums durch die geöffnete Mündung der Durchführungsöffnung (7) hindurch nach außen erzeugen.

2. Sperreinrichtung nach Anspruch 1, dadurch gekennzeichnet, daß die Sperrglieder (9) als Klappen ausgebildet sind, die durch von den Rauchmeldern (10) ein- und ausschaltbare Elektromagnete (11) in der Schließstellung gehalten sind und sich bei ausgeschalteten Elektromagneten (11) in die Offenstellung bewegen können.

3. Sperreinrichtung nach Anspruch 2, dadurch gekennzeichnet, daß die Klappen mit horizontaler Gelenkachse (9') oberhalb der jeweiligen Mündung der Durchführungsöffnung (7) am Schottkasten (4) angelenkt sind und sich bei ausgeschaltetem Elektromagnet (11) unter dem Druck der Strömung des Gasmediums selbsttätig nach außen öffnen.

4. Sperreinrichtung nach einem der Ansprüche 1 bis 3, dadurch gekennzeichnet, daß die Mittel zur Versorgung mit dem Gasmedium und zur Erzeugung seiner Strömung aus mindestens einer im Schottkasten (4) mündenden und außerhalb des Schottkastens mit dem unter Druck stehenden Gasmedium gespeisten Zuführungsleitung (15) bestehen.

5. Sperreinrichtung nach Anspruch 4, dadurch gekennzeichnet, daß die Zuführungsleitung (15) in einer Verteilerdüse (17) mündet, die mit einem flüssigen und/oder einem gasförmigen Löschmittel (18) beaufschlagbar ist, so daß der aus der Mündung der Zuführungsleitung (15) austretende Strahl des Gasmediums das Löschmittel fein verteilt in die Durchführungsöffnung (7) einsprüht.

6. Sperreinrichtung nach Anspruch 5, dadurch gekennzeichnet, daß im Schottkasten (4) oberhalb der Durchführungsöffnung (7) ein Vorratsbehälter (19) für das Löschmittel (18) vorgesehen ist und mit dem Inneren der Verteilerdüse (17) in Verbindung steht.

7. Sperreinrichtung nach Anspruch 6, dadurch gekennzeichnet, daß der Vorratsbehälter (19) die Verteilerdüse (17) ringförmig umgibt, wobei der Düsenmantel (20) einen Wandteil auch des Vorratsbehälters (19) bildet und mit Durchtrittsöffnungen (21) für das Löschmittel (18) versehen ist.

8. Sperreinrichtung nach Anspruch 6 oder 7, dadurch gekennzeichnet, daß der Vorratsbehälter (19) Aluminiumhydroxid Al(OH)₃ enthält.

9. Sperreinrichtung nach einem der Ansprüche 1 bis 3, dadurch gekennzeichnet, daß die Mittel zur Versorgung mit dem Gasmedium und zur Erzeugung seiner Strömung mindestens eine im Schottkasten (4) angeordnete und mit dem Druckausgang zur Durchführungsöffnung (7) hin mündende Gaspumpe (25, 39) umfassen, die ausgangsseitig an im Schottkasten (4) vorgesehene Ansaugkanäle (27) angeschlossen ist, welche auf beiden Seiten der Wand (3) je eine Ansaugmündung (27') mit einem von den Rauchmeldern (10) steuerbaren Sperrorgan (28) aufweisen, wobei die Steuerung der Sperrorgane (28) so ausgebildet ist, daß bei Rauch in einem der beiden Brandabschnitte sich das jeweils auf der anderen Seite der Wand (3) befindliche Sperrorgan (28) öffnet.

10. Sperreinrichtung nach Anspruch 9, dadurch gekennzeichnet, daß die Sperrorgane (9) als Ansaugklappen ausgebildet sind, die in ihrer Sperrstellung durch von den Rauchmeldern (10) ein- und ausschaltbare Elektromagnete (29) gehalten sind und sich bei ausgeschaltetem Elektromagneten (29) durch die Wirkung des Ansaugunterdruckes nach innen öffnen.

11. Sperreinrichtung nach Anspruch 9 oder 10, dadurch gekennzeichnet, daß die Gaspumpe als Fördergebläse (25) für das Gasmedium ausgebildet und durch einen von den Rauchmeldern (10) ein- und ausschaltbaren Elektromotor (26) antreibbar ist.

12. Sperreinrichtung nach Anspruch 11, dadurch gekennzeichnet, daß das Fördergebläse (25) mindestens ein Gebläserad (25') in einer Gebläsekammer (31) aufweist, die mit einem flüssigen und/oder einem gasförmigen Löschmittel (18) beaufschlagbar ist, so daß das Gebläserad (25') das Löschmittel (18) mit dem Gasmedium vermischt in die Durchführungsöffnung (7) einsprüht.

13. Sperreinrichtung nach Anspruch 12, dadurch gekennzeichnet, daß der Elektromotor (26) des Fördergebläses (25) mit einer das Löschmittel (18) unter Druck in die Gebläsekammer (31) einspritzenden Kreiselpumpe (32) gekuppelt ist.

14. Sperreinrichtung nach Anspruch 12 oder 13, dadurch gekennzeichnet, daß im Schottkasten (4) oberhalb der Durchführungsöffnung (7) ein Vorratsbehälter (19) für das Löschmittel (18) vorgesehen und mit der Ansaugseite der Gebläsekammer (31) bzw. der Kreiselpumpe (32) in Verbindung steht.

15. Sperreinrichtung nach den Ansprüchen 12 bis 14, dadurch gekennzeichnet, daß der Vorratsbehälter (19) Aluminiumhydroxid AL(OH)₃ enthält und die Zersetzung des Aluminiumhydroxids in der Brandwärme einen Wasserdampfstrom durch die Kreiselpumpe (32) erzeugt, der die Kreiselpumpe (32) als Turbine antreibt, die dann einen vom Elektromotor (26) unabhängigen Antrieb für das Fördergebläse (25) bildet.

16. Sperreinrichtung nach Anspruch 9 oder 10, dadurch gekennzeichnet, daß die Gaspumpe als Flüssigkeitsstrahlpumpe (39) mit vom Löschmittel gebildeter Strahlflüssigkeit ausgebildet ist, wozu im Schottkasten (4) in einer mit den Ansaugkanälen (27) in Verbindung stehenden Diffusordüse (41) eine Strahldüse (40) angeordnet ist,die an eine außerhalb des Schottkastens (4) mit dem unter Druck stehenden Löschmittel gespeiste Versorgungsleitung (42) angeschlossen ist, wobei die Einspeisung des Löschmittels in die Versorgungsleitung (42) durch die Rauchmelder (10) an- und abschaltbar ist.

## Claims

1. A barrier device to prevent the passage of smoke in an apparatus for passing conduits (1) such an electrical cables, pipes or the like through an opening (2) in a wall (3) separating two fire sectors from each other, wherein the apparatus for passing the conduits (1) through the opening in the wall has a partitioning casing (4) which is arranged in the wall opening (2) in sealed relationship with the wall (3) and which forms a passage opening (7) which opens on both sides of the wall (3) and which accommodates the conduits (1) and in which fire-protection and/or extinguishing agents only take effect in a fire situation, characterised in that on each of the two sides of the wall (3) the partitioning casing (4) is provided with at least one respective movable barrier member (9) which closes off the mouth of the passage opening (7) relative to the exterior, that the barrier members (9) can open independently of each other, controlled by smoke detectors (10) arranged in the fire sectors on both sides of the wail, wherein the control is so designed that in the event of smoke in one of the two fire sectors the barrier member (9) disposed on its side of the wall (3) opens, and that there are provided means which, when the barrier member (9) is open, supply the partitioning casing (4) with an incombustible gas medium and produce a flow of said gas medium through the opened mouth of the passage opening (7) to the exterior.

2. A barrier device according to claim 1 characterised in that the barrier members (9) are in the form of flaps which are held in the closed position by solenoids (11) which can be switched on and off by the smoke detectors (10), and can move into the open position when solenoids (11) are switched off.

3. A barrier device according to claim 2 characterised in that the flaps are pivotally mounted to the partitioning casing (4) with a horizontal hinge axis (9') above the respective mouth of the passage opening (7) and automatic open outwardly when the solenoid (11) is switched off under the pressure of the flow of the gas medium.

4. A barrier device according to one of claims 1 to 3 characterised in that the means for the supply with the gas medium and for producing its flow comprise at least one feed conduit (15) which opens in the partitioning casing (4) and which is supplied outside the partitioning casing with the gas medium which is under pressure.

5. A barrier device according to claim 4 characterised in that the feed conduit (15) opens in a distributor nozzle (17) which can be supplied with a liquid and/or a gaseous extinguishing agent (18) so that the jet of gas medium, which jet issues from the mouth aperture of the feed conduit (15), sprays the extinguishing agent in finely distributed form into the passage opening (7).

6. A barrier device according to claim 5 characterised in that a supply container (19) for the extinguishing agent (18) is provided in the partitioning casing (4) above the passage opening (7) and is communicated with the interior of the distributor nozzle (17).

7. A barrier device according to claim 6 characterised in that the supply container (19) surrounds the distributor nozzle (17) in an annular configuration, wherein the nozzle casing (20) also forms a wall portion of the supply container (19) and is provided with passage openings (21) for the extinguishing agent (18) to pass therethrough.

8. A barrier device according to claim 6 or claim 7 characterised in that the supply container (19) contains aluminium hydroxide Al(OH)₃.

9. A barrier device according to one of claims 1 to 3 characterised in that the means for the supply with the gas medium and for producing its flow include at least one gas pump (25, 39) which is arranged in the partitioning casing (4) and which opens with the pressure outlet to the passage opening (7) and which is connected on the outlet side to intake passages (27) which are provided in the partitioning casing (4) and which on each of the two sides of the wail (3) have a respective intake mouth opening (27') with a barrier element (28) controllable by the smoke detectors (10), wherein the control of the barrier elements (28) is so designed that, in the event of smoke in one of the two fire sectors, the barrier element (28) disposed on the respective other side of the wall (3) opens.

10. A barrier device according to claim 9 characterised in that the barrier elements (9) are in the form of intake flaps which are held in their barrier position by solenoids (29) which can be switched on and off by the smoke detectors (10), and open inwardly due to the effect of the intake suction action when the solenoid (29) is switched off.

11. A barrier device according to claim 9 or claim 10 characterised in that the gas pump is in the form of a delivery blower (25) for the gas medium and is drivable by an electric motor (26) which can be switched on and off by the smoke detectors (10).

12. A barrier device according to claim 11 characterised in that the delivery blower (25) has at least one impeller (25') in a blower chamber (31) which can be supplied with a liquid and/or a gaseous extinguishing agent (18) so that the impeller (25') sprays the extinguishing agent (18), mixed with the gas medium, into the passage opening (7).

13. A barrier device according to claim 12 characterised in that the electric motor (26) of the delivery blower (25) is coupled to a rotary pump (32) for spraying the extinguishing agent (18) into the blower chamber (31) under pressure.

14. A barrier device according to claim 12 or claim 13 characterised in that a supply container (19) for the extinguishing agent (18) is provided in the partioning casing (4) above the passage opening (7) and is communicated with the intake side of the blower chamber (31) or the rotary pomp (32).

15. A barrier device according to claims 12 to 14 characterised in that the supply container (19) contains aluminium hydroxide Al(OH)₃ and decomposition of the aluminium hydroxide in the heat of the fire produces a flow of water vapour through the rotary pump (32) to drive the rotary pump (32) as a turbine which then forms a drive, independent of the electric motor (26), for the delivery blower (25).

16. A barrier device according to claim 9 or claim 10 characterised in that the gas pump is in the form of a liquid jet pump (39) with a jet liquid which is formed by the extinguishing agent, for which purpose a jet nozzle (40) is arranged in the partitioning casing (4) in a diffuser nozzle (41) communicating with the intake passages (27), the jet nozzle (40) being connected to a supply conduit (42) which is fed outside the partitioning casing (4) with the pressurised extinguishing agent, wherein the feed of the extinguishing agent into the supply conduit (42) can be switched on and off by the smoke detectors (10).

## Revendications

1. Dispositif de blocage empêchant le passage de la fumée dans un dispositif utilisé pour la traversée de lignes ou conduites (1) telles que des câbles électriques, des tubes ou analogues, dans une ouverture (2) ménagée dans une paroi (3) séparant l'un de l'autre deux sections coupe-feu, et dans lequel le dispositif pour la traversée des lignes ou conduites (1) possède une boîte de cloison étanche (4), qui forme une ouverture de traversée (7) qui débouche des deux côtés de la paroi (3) et loge les lignes ou conduites (1) et dans laquelle des moyens de protection contre l'incendie et/ou des moyens d'extinction agissent uniquement dans le cas d'un incendie, caractérisé en ce que la boîte de cloison étanche (4) comporte, des deux côtés de la paroi (3), respectivement au moins un organe mobile de blocage (9), qui ferme l'embouchure de l'ouverture de traversée (7) en direction de l'extérieur, que les organes de blocage (9) peuvent s'ouvrir indépendamment l'un de l'autre et d'une manière commandée par des détecteurs de fumée (10) disposés dans des sections coupe-feu des deux côtés de la paroi, la commande étant conçue de telle sorte que, dans le cas de l'apparition d'une fumée dans l'une des deux sections coupe-feu, l'organe de blocage (9) situé sur le côté de la paroi (3), tourné vers cette section, et qu'il est prévu des moyens qui, lorsque l'organe de blocage (9) est ouvert, envoient un milieu formé d'un gaz et d'un combustible à la boîte de cloison étanche (4) et produisent un écoulement de ce milieu gazeux à travers l'embouchure ouverte de l'ouverture de traversée (7), en direction de l'extérieur.

2. Dispositif de blocage selon la revendication 1, caractérisé en ce que les organes de blocage (9) sont réalisés sous la forme de clapets, qui sont maintenus dans la position fermée par des électroaimants (11) pouvant être activés et désactivés par les détecteurs de fumée (10) et peuvent venir dans la position ouverte lorsque les électroaimants (11) sont désactivés.

3. Dispositif de blocage selon la revendication 2, caractérisé en ce que les clapets sont articulés avec un axe horizontal d'articulation (9') au-dessus de l'embouchure respective de l'ouverture de traversée (7), sur la boîte de cloison étanche (4) et s'ouvre automatiquement vers l'extérieur sous l'effet de la pression de l'écoulement du milieu gazeux, lorsque l'électroaimant (11) est désactivé.

4. Dispositif de blocage selon l'une des revendications 1 à 3, caractérisé en ce que les moyens d'alimentation du milieu gazeux et de production d'un écoulement sont constitués par au moins une canalisation d'amenée (15) qui débouche dans la boîte de cloison étanche (4) et est alimenté, à l'extérieur de la boîte de cloison étanche, par le milieu gazeux placé sous pression.

5. Dispositif de blocage selon la revendication 4, caractérisé en ce que la conduite d'amenée (15) débouche dans une buse de distribution (17), qui peut être chargée par un milieu d'extinction liquide et/ou gazeux (18) de sorte que le jet du milieu gazeux, qui sort de l'embouchure de la conduite d'amenée (15), injecte le milieu d'extinction d'une manière répartie finement dans l'ouverture de traversée (7).

6. Dispositif de blocage selon la revendication 5, caractérisé en ce qu'un réservoir (19) pour le milieu d'extinction (18) est prévu dans la boîte de cloison étanche (4) au-dessus de l'ouverture de traversée (7) et est relié à l'intérieur de la buse de distribution (17).

7. Dispositif de blocage selon la revendication 6, caractérisé en ce que le réservoir (19) entoure annulairement la buse de distribution (17), l'enveloppe (20) de la buse formant également un élément de paroi du réservoir (19) et étant pourvue d'ouvertures de passage (21) pour le milieu d'extinction (18).

8. Dispositif de blocage selon la revendication 6 ou 7, caractérisé en ce que le réservoir (19) contient de l'hydroxyde d'aluminium Al(OH)₃.

9. Dispositif de blocage selon l'une des revendications 1 à 3, caractérisé en ce que les moyens d'alimentation du milieu gazeux et de production d'un écoulement comprennent au moins une pompe à gaz (25,39), qui est disposée dans la boîte de cloison étanche (4) et dont la sortie de refoulement débouche dans l'ouverture de traversée (7), et qui est raccordée, côté sortie, à des canaux d'aspiration (27) prévus dans la boîte de cloison étanche (4) et qui possèdent, des deux côtés de la paroi (3), respectivement une embouchure d'aspiration (27') possédant un organe de blocage commandable par les détecteurs de fumée (10), la commande des organes de blocage (28) étant conçue de telle sorte que, dans le cas où de la fumée est présente dans l'une des deux sections coupe-feu, l'organe de blocage (28) situé respectivement sur l'autre côté de la paroi (3) s'ouvre.

10. Dispositif de blocage selon la revendication 9, caractérisé en ce que les organes de blocage (9) sont réalisés sous la forme de clapets d'aspiration, qui sont retenus dans leur position fermée par des électroaimants (29) pouvant être activés et désactivés par les détecteurs de fumée (10) et qui s'ouvrent vers l'intérieur sous l'action de la dépression d'aspiration, lorsque l'électroaimant (29) est désactivé.

11. Dispositif de blocage selon la revendication 9 ou 10, caractérisé en ce que la pompe à gaz est réalisée sous la forme d'un ventilateur de refoulement (25) pour le milieu gazeux et peut être entraînée par un moteur électrique (26) pouvant être activé et désactivé par les détecteurs de fumée (10).

12. Dispositif de blocage selon la revendication 11, caractérisé en ce que le ventilateur de refoulement (25) comporte au moins un rotor de ventilateur (25') situé dans une chambre de ventilateur (31), qui peut être chargé par un milieu d'extinction liquide et/ou gazeux (18) de sorte que le rotor (25') du ventilateur injecte le milieu d'extinction (18), mélangé au milieu gazeux, dans l'ouverture de traversée (7).

13. Dispositif de blocage selon la revendication 12, caractérisé en ce que le moteur électrique (26) du ventilateur de refoulement (25) est accouplé à une pompe centrifuge (32) qui injecte le milieu d'extinction (18) sous pression dans la chambre (31) du ventilateur.

14. Dispositif de blocage selon la revendication 12 ou 13, caractérisé en ce qu'un réservoir (19) pour le milieu d'extinction (18) est prévu dans la boîte de cloison étanche (4) au-dessus de l'ouverture de traversée (7), et est relié au côté aspiration de la chambre (31) du ventilateur ou de la pompe centrifuge (32).

15. Dispositif de blocage selon les revendications 12 à 14, caractérisé en ce que le réservoir (19) contient de l'hydroxyde d'aluminium Al(OH)₃ et que la dissociation de l'hydroxyde d'aluminium sous l'effet de la chaleur de l'incendie produit un courant de vapeur (2) traversant la pompe centrifuge (32), et entraîne cette pompe centrifuge (32) sous la forme d'une turbine qui constitue alors un système d'entraînement, indépendant du moteur électrique (26), pour le ventilateur de refoulement (25).

16. Dispositif de blocage selon la revendication 9 ou 10, caractérisé en ce que la pompe à gaz est réalisée sous la forme d'une pompe à jet de liquide (39) projetant un jet de liquide formé par le milieu d'extinction, et qu'à cet effet dans la boîte de cloison étanche (4) est disposée, dans une buse diffusante (41) reliée aux canaux d'aspiration (27), une buse à jet (40), qui est raccordée à une conduite d'alimentation (42) et qui est alimentée par un milieu d'extinction placé sous pression, à l'extérieur de la boîte de cloison étanche (4), l'alimentation du milieu d'extinction dans la conduite d'alimentation (42) pouvant être activée et désactivée par les détecteurs de fumée (10).
